# EUROPÄISCHE PATENTSCHRIFT

(11) **EP 1 665 491 B1**
(45) Veröffentlichungstag und Bekanntmachung des Hinweises auf die Patenterteilung: **02.05.2007**
(21) Anmeldenummer: 04786167.9
(22) Anmeldetag: 16.08.2004
(51) Int. Cl.: H02H 7/22, H01F 7/18

(54) **VERFAHREN UND SCHALTUNGSANORDNUNG ZUR SCHNELLAUSSCHALTUNG VON NIEDERSPANNUNGS- LEISTUNGSSCHALTERN**
METHOD AND CIRCUIT ARRANGEMENT FOR RAPIDLY SWITCHING OFF LOW-VOLTAGE CIRCUIT BREAKERS
PROCEDE ET CIRCUIT PERMETTANT DE DECLENCHER RAPIDEMENT DES DISJONCTEURS BASSE TENSION

(30) Priorität: 11.09.2003 DE 10342598
(43) Veröffentlichungstag der Anmeldung: 07.06.2006
(73) Patentinhaber: SIEMENS AKTIENGESELLSCHAFT, 80333 München (DE)
(72) Erfinder: BUXTON, Clifford, A., Bellefontaine, OH 43311 (US); LIEBETRUTH, Marc, 16548 Glienecke (DE); RÖHL, Wolfgang, 13503 Berlin (DE)
(86) Internationale Anmeldenummer: PCT/DE2004/001842
(87) Internationale Veröffentlichungsnummer: WO 2005/027294

(56) Entgegenhaltungen:
- DE-A- 10 125 051
- DE-A- 19 957 260
- US-A1- 2002 085 330

## Beschreibung

Die Erfindung betrifft ein Verfahren und eine Schaltungsanordnung zur Schnellausschaltung von Niederspannungs-Leistungsschaltern, indem ein im Normalbetrieb im Kurzschluss betriebenes Schaltelement, zu dem ein schneller Auslösemagnet des Niederspannungs-Leistungsschalters parallel geschaltet ist, von einem Strom beaufschlagt wird, der dem durch den Niederspannungs-Leistungsschalter überwachten Strom proportional ist, und der Kurzschluss dieses Schaltelementes aufgehoben wird, wenn der durch den Niederspannungs-Leistungsschalter überwachte Strom einen festgelegten Schwellwert erreicht.

Ein solches Verfahren ist aus DE 10 125 051 bekannt.

Bei hohen Strömen, zum Beispiel durch einen Kurzschluss im Netz bedingt, kann auch eine unverzögerte Ausschaltung eines Niederspannungs-Leistungsschalters noch zu langsam sein, da die Signalverarbeitung im Mikroprozessor des elektronischen Auslösers einige Zeit benötigt. Bei Niederspannungs-Leistungsschaltern, bei denen die Energie für die Auslöseeinheit über weitere Stromwandler und Gleichrichter aus dem Netz selber bezogen wird, steht außerdem bei Inbetriebnahme des Leistungsschalters noch keine Energie zur Verfügung, solange ein zugehöriger Ladekondensator noch nicht aufgeladen ist. Es wurde deshalb bereits vorgeschlagen, bei Erkennen eines hohen Stromes im Netz diesen direkt auf einen schnellen Auslösemagneten des Leistungsschalters kommutieren zu lassen, der die Verklinkung des Schalters löst. Dazu werden die Sekundärseiten der für die Energieversorgung der Auslöseeinheit vorgesehenen Stromwandler über Brückengleichrichter und über einen Kurzschlusspfad eines Schaltelementes an die Auslöseeinheit geschaltet. Der schnelle Auslösemagnet liegt parallel zu dem Schaltelement, zum Beispiel einem Reedrelais, einem Transistor, angesteuert aus einer Rogowskispule, einem Feldsensor o.ä., und ist bei Normalbetrieb kurzgeschlossen. Erst bei hohen Kurzschlussströmen im Netz, zum Beispiel 35 kA, öffnet der parallele Kurzschlusspfad, so dass der schnelle Auslösemagnet aktiviert wird.

Bei sehr hohen Strömen kann der Auslösemagnet jedoch unter Umständen thermisch hoch belastet werden, was zu seiner Beschädigung oder sogar zum Ausfall des Leistungsschalters führen kann. Enthält der Auslösemagnet wie üblich einen permanentmagnetischen Kern, so können außerdem folgende Effekte auftreten: Wird der Auslösemagnet mit zu hohern Strom beaufschlagt, so kann der Permanentmagnet ummagnetisieren und seine Auslösezeit wird größer oder es erfolgt im ungünstigsten Fall gar keine Auslösung. In allen Fällen ist das rasche "Aufdrücken" eines den Permanentmagneten entgegengesetzten starken Magnetfeldes für diesen Effekt verantwortlich. Es zeigt sich, dass bei einem bestimmten Strom ein Optimum bezüglich der Ausschaltgeschwindigkeit vorliegt-.

Der Erfindung liegt die Aufgabe zugrunde, eine Schaltungsanordnung zur Schnellauslösung von Niederspannungs-Leistungsschaltern anzugeben, die auch bei hohen Strömen eine sichere Ausschaltung bewirkt und den Auslösemagneten dabei nicht gefährdet.

Erfindungsgemäß wird die Aufgabe gelöst durch die Merkmale der Ansprüche 1 und 2. Zweckmäßige Ausgestaltungen sind Gegenstand der Unteransprüche.

Danach wird der schnelle Auslösemagnet mindestens zeitweise wieder kurzgeschlossen, sobald der überwachte Strom einen zweiten vorgegebenen Schwellwert erreicht.

Eine zugehörige Schaltungsanordnung zur Realisierung des Verfahrens kann so aufgebaut sein, dass das Schaltelement ein Schalttransistor ist, der durch eine zweite Überwachungsschaltung für den durch den Niederspannungs-Leistungsschalter überwachten Strom bei Erreichen eines zweiten vorgegebenen Schwellwertes wieder in den leitenden Zustand steuerbar ist.

Zusätzlich zu den bisher bereits bekannten Maßnahmen ist durch das Verfahren beziehungsweise die Schaltungsanordnung dafür gesorgt, dass der Strom durch den Magneten nach Erreichen eines vorgegebenen Wertes nicht weiter ansteigen kann. Hiermit werden folgende Vorteile erreicht:
a) Es ist keine thermische Überlastung des Magneten möglich.
b) Es ist keine Veränderung eines Permanentmagneten des Auslösers möglich.
c) Ein unverändert schnelles Ansprechen des Magneten ist gewährleistet.
d) Es ist kein Ausfall der Auslösung bei hohen Eingangsströmen möglich.

Die Ansteuerung kann aus Stromwandlern erfolgen, für die einen Standardtyp vorgesehen ist, so dass keine nennenswerte Strombegrenzung im oberen Strombereich auftritt. Das bedeutet, dass das Verfahren bevorzugt mit eigenen Stromwandlern für die Schnellausschaltung realisiert wird. Ein Eingriff in die Stromzuführung zur elektronischen Auslöseeinheit, wie sie aus der Vorbildlösung bekannt ist, ist somit nicht nötig. Das hat einmal den Vorteil, dass die Schnellauslösung auch nachträglich vorgesehen werden kann. Zum anderen müssen nicht sämtliche Schalter mit der Option für eine Schnellausschaltung ausgerüstet werden, da nur wenige Anlagenbetreiber diese Funktion wünschen.

Wie die bisher bereits bekannte Schaltung zur Schnellauslösung eines Niederspannungs-Leistungsschalters hat die Maßnahme den Vorteil, dass die Auslösung bei einem Kurzschluss im überwachten Netz sehr schnell und selbst dann erfolgt, wenn der Leistungsschalter beim Einschalten auf einen Kurzschluss schaltet.

Die Erfindung wird nachfolgend unter Bezugnahme auf die Zeichnungen beispielhaft näher erläutert. Es zeigen:
- Figur 1: ein Beispiel für eine erfindungsgemäße Schaltungsanordnung und
- Figur 2: eine zweite Variante der Schaltungsanordnung.

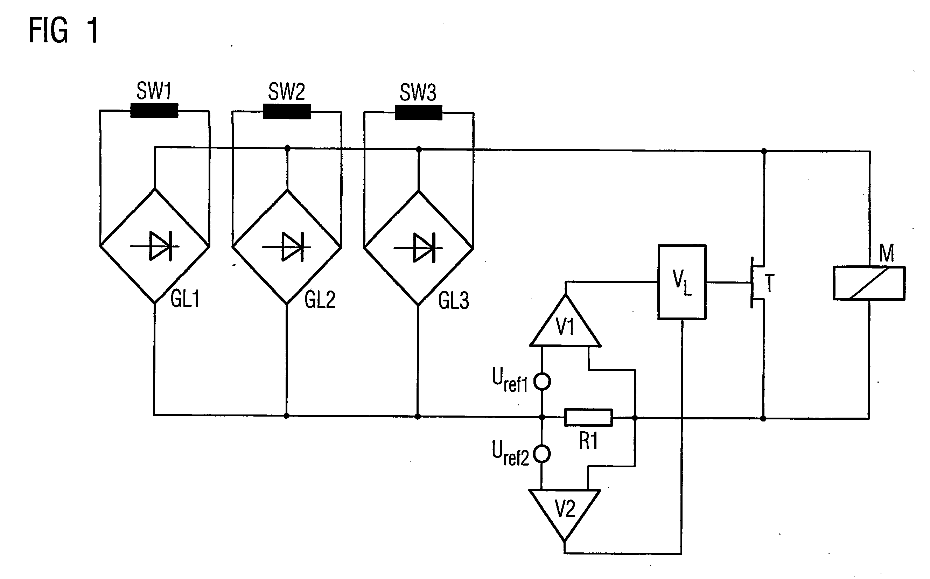

Figur 1 zeigt schematisch einen elektronischen Auslöser für einen Niederspannungs-Leistungsschalter an einem dreiphasigen Netz. Die Sekundärseiten von Stromwandlern SW1, SW2, SW3 sind über Brückengleichrichter GL1, GL2, GL3 parallel geschaltet. Im Strompfad dieses Auslösekreises liegt ein Schalttransistor T, der im normalen Betrieb durch eine Ansteuerschaltung VL in den leitenden Betrieb gesteuert wird. Parallel zum Transistor T liegt ein schneller Auslösemagnet M des Niederspannungs-Leistungsschalters. Der Auslösemagnet M ist durch den Schalttransistor T damit normalerweise kurzgeschlossen.

Die Ansteuerschaltung VL kann durch den Ausgang eines Komparators V1 angesteuert werden, dessen Eingänge durch eine Referenzspannungsquelle Uref1 und einen Widerstand R1 überbrückt sind, der im Strompfad des Auslösekreises liegt.

Überschreitet die Spannung am Widerstand R1 einen durch die Referenzspannungsquelle Uref1 vorgegebenen Ansprechwert, wird der zuvor im Kurzschluss betriebene Schalttransistor T geöffnet und der Strom kommutiert auf den Auslösemagneten M, der die schnelle Auslösung des Niederspannungs-Leistungsschalters bewirkt. Soweit ist das Prinzip der schnellen Auslösung bereits bekannt.

Erfindungsgemäß vorgesehen ist nun ein weiterer Komparator V2 und eine zweite Referenzspannungsquelle Uref2, die in vergleichbarer Weise wie der Komparator V1 wirken. Überschreitet die Spannung am Widerstand R1 infolge eines entsprechend hohen Stromes einen durch die Referenzspannungsquelle Uref2 vorgegebenen Wert, so wird der Schalttransistor T über den Komparator V2 und den zweiten Eingang an der Ansteuerschaltung VL wieder stromleitend geschaltet.

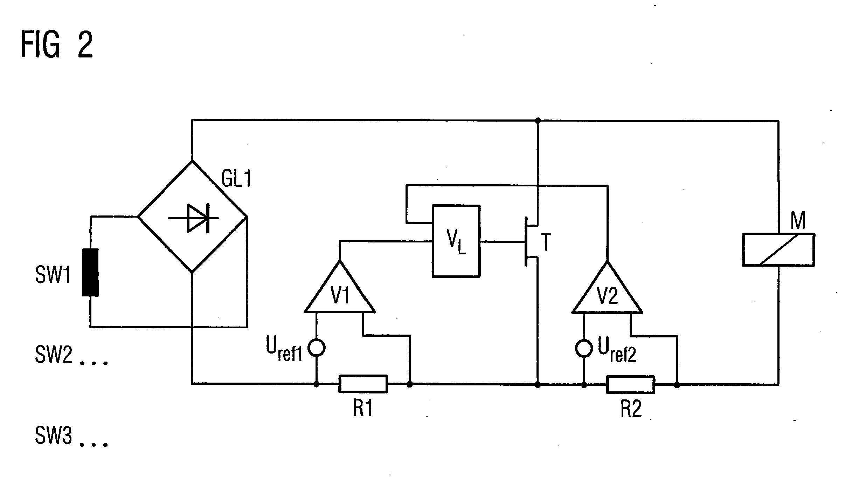

Die vorbeschriebene Schaltung hat noch den Nachteil, dass bei einem sehr steilen Stromanstieg unter Umständen der Ansteuerimpuls auf den Auslösemagneten M zu kurz wird. Die Schaltung nach Figur 2 vermeidet diesen Nachteil, indem der zweite Komparator V2 mit einem zweiten Widerstand R2 in den Stromkreis des Magneten M geschaltet ist. Da hier der Strom durch den Auslösemagneten M getaktet geregelt wird, treten keine zeitkritischen Effekte auf. Die Taktung erfolgt selbsttätig, solange der Strom am Widerstand R1 eine Spannung erzeugt, die größer ist als die Referenzspannung Uref1. Sobald die Spannung am Widerstand R2 die Referenzspannung Uref2 übersteigt, kommutiert der Strom auf den Transistor T. Unterschreitet es diesen Wert dann wieder, kommutiert der Strom wieder auf den Magneten M.

## Patentansprüche

1. Verfahren zur Schnellausschaltung von Niederspannungs-Leistungsschaltern, indem ein im Normalbetrieb im Kurzschluss betriebenes Schaltelement, zu dem ein schneller Auslösemagnet des Niederspannungs-Leistungsschalters parallel geschaltet ist, von einem dem durch den Niederspannungs-Leistungsschalter überwachten Strom proportionalen Strom beaufschlagt wird, und der Kurzschluss dieses Schaltelementes aufgehoben wird, wenn der durch den Niederspannungs-Leistungsschalter überwachte Strom einen festgelegten Schwellwert erreicht,
**dadurch gekennzeichnet, dass**
der schnelle Auslösemagnet mindestens zeitweise wieder kurzgeschlossen wird, sobald der überwachte Strom einen zweiten vorgegebenen Schwellwert erreicht.

2. Schaltungsanordnung zur Schnellausschaltung von Niederspannungs-Leistungsschaltern, bei dem in einem Auslösestromkreis ein im Normalbetrieb im Kurzschluss betriebenes Schaltelement, zu dem ein schneller Auslösemagnet des Niederspannungs-Leistungsschalters parallel geschaltet ist, von einem dem durch den Niederspannungs-Leistungsschalter überwachten Strom proportionalen Strom beaufschlagt ist, sowie eine Überwachungsschaltung für den durch den Niederspannungs-Leistungsschalter überwachten Strom, mit der der Kurzschluss dieses Schaltelementes bei Erreichen eines festgelegten Schwellwertes aufgehoben wird,
**dadurch gekennzeichnet, dass**
das Schaltelement ein Schalttransistor (T) ist, der durch eine zweite Überwachungsschaltung für den durch den Niederspannungs-Leistungsschalter überwachten Strom bei Erreichen eines zweiten vorgegebenen Schwellwertes wieder in den leitenden Zustand steuerbar ist.

3. Schaltungsanordnung nach Anspruch 2,
**dadurch gekennzeichnet, dass**
die Überwachungsschaltung durch einen Komparator (V2) realisiert ist, an dessen Eingänge eine Referenzspannungsquelle (Uref2) und eine zum Strom im Auslösestromkreis proportionale Spannung gelegt sind, und der Ausgang des Komparators (V2) an eine den Schalttransistor (T) steuernde Ansteuerschaltung (VL) geführt ist.

4. Schaltungsanordnung nach Anspruch 2,
**dadurch gekennzeichnet, dass**
die Überwachungsschaltung durch einen Komparator (V2) realisiert ist, an dessen Eingänge eine Referenzspannungsquelle (Uref2) und eine zum Strom im Stromkreis des Auslösemagneten (M) proportionale Spannung gelegt sind, und der Ausgang des Komparators (V2) an eine den Schalttransistor (T) steuernde Ansteuerschaltung (VL) geführt ist.

## Claims

1. Method for rapidly tripping low-voltage circuit breakers by a switching element, which is operated in the short circuit during normal operation and which is connected in parallel with a rapid-response tripping magnetic of the low-voltage circuit breaker, having a current applied to it which is proportional to the current monitored by the low-voltage circuit breaker, and the short circuit across this switching element being cancelled if the current monitored by the low-voltage circuit breaker reaches a fixed threshold value, **characterized in that** the rapid-response tripping magnet is short-circuited again at least temporarily as soon as the monitored current reaches a second predetermined threshold value.

2. Circuit arrangement for rapidly tripping low-voltage circuit breakers, in the case of which, in a tripping circuit, a switching element, which is operated in the short circuit during normal operation and which is connected in parallel with a rapid-response tripping magnet of the low-voltage circuit breaker, has a current applied to it which is proportional to the current monitored by the low-voltage circuit breaker, and a monitoring circuit for the current monitored by the low-voltage breaker, which monitoring circuit is used to cancel the short circuit across this switching element when a fixed threshold value is reached, **characterized in that** the switching element is a switching transistor (T), which can be controlled, by means of a second monitoring circuit for the current monitored by the low-voltage circuit breaker, so as to return to the on state when a second predetermined threshold value is reached.

3. Circuit arrangement according to Claim 2, **characterized in that** the monitoring circuit is implemented by a comparator (V2), a reference voltage source (Uref2) and a voltage which is proportional to the current in the tripping circuit being applied to the inputs of said comparator (V2), and the output of the comparator (V2) being passed to a drive circuit (VL) controlling the switching transistor (T).

4. Circuit arrangement according to Claim 2, **characterized in that** the monitoring circuit is implemented by a comparator (V2), a reference voltage source (Uref2) and a voltage which is proportional to the current in the circuit of the tripping magnet (M) being applied to the inputs of said comparator (V2), and the output of the comparator (V2) being passed to a drive circuit (VL) controlling the switching transistor (T).

## Revendications

1. Procédé pour le déclenchement d'arrêt rapide de disjoncteurs basse tension, d'après lequel un élément de commutation fonctionnant en court-circuit en mode de fonctionnement normal, avec lequel est monté en parallèle un aimant de déclenchement rapide du disjoncteur basse tension, est alimenté par un courant proportionnel au courant surveillé par le disjoncteur basse tension, et le court-circuit de cet élément de commutation est interrompu lorsque le courant surveillé par le disjoncteur basse-tension atteint une valeur de seuil définie,
**caractérisé en ce que** l'aimant de déclenchement rapide est à nouveau mis en court-circuit au moins temporairement, dès que le courant surveillé atteint une deuxième valeur de seuil prescrite.

2. Agencement de circuit pour le déclenchement d'arrêt rapide de disjoncteurs basse tension, comprenant, dans un circuit de courant de déclenchement, un élément de commutation qui fonctionne en court-circuit en mode de fonctionnement normal, avec lequel est monté en parallèle un aimant de déclenchement rapide du disjoncteur basse tension, et est alimenté par un courant proportionnel au courant surveillé par le disjoncteur basse tension, l'agencement comprenant également un circuit de surveillance pour le courant surveillé par le disjoncteur basse tension, à l'aide duquel le court-circuit dudit élément de commutation est interrompu lorsqu'une valeur de seuil définie est atteinte,
**caractérisé en ce que** l'élément de commutation est un transistor de commutation (T) qui peut à nouveau être commuté dans l'état conducteur par un deuxième circuit de surveillance pour le courant surveillé par le disjoncteur basse tension, lorsqu'une deuxième valeur de seuil prescrite est atteinte.

3. Agencement de circuit selon la revendication 2,
**caractérisé en ce que** le circuit de surveillance est réalisé par un comparateur (V2) aux entrées duquel est appliquée une source de tension de référence (Uref2) et une tension proportionnelle au courant dans le circuit de courant de déclenchement, la sortie du comparateur (V2) étant menée à un circuit de commande (VL) commandant le transistor de commutation (T).

4. Agencement de circuit selon la revendication 2,
**caractérisé en ce que** le circuit de surveillance est réalisé par un comparateur (V2) aux entrées duquel est appliquée une source de tension de référence (Uref2) et une tension proportionnelle au courant dans le circuit de courant de l'aimant de déclenchement (M), la sortie du comparateur (V2) étant menée à un circuit de commande (VL) commandant le transistor de commutation (T).
